# EUROPEAN PATENT APPLICATION

(11) **EP 3 672 015 A1**
(43) Date of publication of application: **24.06.2020**
(21) Application number: 18382947.2
(22) Date of filing: 19.12.2018
(51) Int. Cl.: H02J 7/00, H02J 7/34

(54) **CHARGING METHOD FOR CHARGING AT LEAST ONE LEAD-ACID BATTERY, AND A HYBRID BATTERY**

(71) Applicant: Ikerlan, S. Coop., 20500 Mondragon (ES)
(72) Inventor: CREGO MEDA, Jon, 20500 Arrasate (ES); RIVAS GUTIERREZ, Mikel, 20500 Arrasate (ES); USABIAGA KARRERA, Maider, 20500 Arrasate - Mondragon Gipuzkoa (ES); AIZPURU LARRAÑAGA, Iosu, 20120 Hernani Gipuzkoa (ES)
(74) Representative: Igartua, Ismael

(57) **Abstract**

The present invention relates to a charging method for charging a lead-acid battery (2), comprising a first charging step for charging the lead-acid battery (2) through a charger and a second charging step for charging the lead-acid battery (2) through a battery with a high cyclability (3), during which the lead-acid battery (2) is fully charged by the battery with a high cyclability (3) supplying a current of less than about 10% of the rated capacity of the lead-acid battery (2) for a maximum of about four hours to the lead-acid battery (2). The present invention also relates to a hybrid battery comprising a lead-acid battery (2), a battery with a high cyclability (3), and control means (9) for activating or deactivating the charging of the lead-acid battery (2) through the battery with a high cyclability (3).

## Description

### TECHNICAL FIELD

The present invention relates to a charging method for charging at least one lead-acid battery, and on the other hand, to a hybrid battery comprising at least one lead-acid battery and at least one battery with a high cyclability which converts the lead-acid battery into a hybrid battery.

### PRIOR ART

Lead-acid batteries are known to be used for applications not connected to the general power supply grid, particularly for energy storage systems based on renewable energies (solar energy, wind energy, etc.), and/or with generators (generally diesel generators). A problem associated with the use of batteries of this type in places where the charging energy is limited and cannot be controlled is the sulfation of lead-acid batteries which limits the service life thereof. The deficiency of a full charge in the lead-acid battery leads to degradation thereof by sulfation.

There are different known methods which attempt to provide solutions to the lead-acid battery sulfation problem. Some methods solve the problem working on the composition and the manufacture of the same lead-acid batteries by means of adding additives such as carbon which improves battery charge acceptance and allows fully charging the battery in a shorter time. The charging time is a critical factor that promotes battery degradation by sulfation in those applications in which the charging process is limited, like in the case of applications in which renewable energies are used for charging batteries.

Other solutions, like the one proposed in document US 2012/0098501A1, use the following charging method for improving lead-acid battery efficiency. The method comprises the steps of determining a state of charge for a lead-acid battery, comparing the state of charge against a predetermined charge zone, and maintaining the charge of the lead-acid battery such that the state of charge is within the charge zone. The charge zone is defined by an upper limit not more than 90% of the maximum charge, and preferably not more than 85% of the maximum charge, and a lower limit not less than 70% of the maximum charge, and preferably not less than 75% of the maximum charge.

Finally, document US 2017/00070081A1 describes a charger having integrated therein a high-cycle chemical battery and is directly connected to a lead-acid battery and to a photovoltaic panel.

### DISCLOSURE OF THE INVENTION

The object of the invention is to provide a charging method for charging at least one lead-acid battery, and on the other hand, a hybrid battery, as defined in the claims.

One aspect of the invention relates to a charging method for charging at least one lead-acid battery, comprising a first charging step for charging the lead-acid battery through an external charger and a second charging step for charging the lead-acid battery through a battery with a high cyclability during which the lead-acid battery is fully charged by providing the excess charge required for desulfation, with the current supplied to the lead-acid battery by the battery with a high cyclability being less than about 10% of the rated capacity of the lead-acid battery, for a maximum of about four hours.

Degradation of the lead battery, which is a very significant existing problem occurring in applications in which charging through an exterior charger is restricted, is thereby greatly reduced. In said cases, when the lead-acid battery is practically charged but the energy charging same has been depleted, a battery sulfation process is favored due to the deficiency of a full charge and the lack of time to fully charge the battery for proper desulfation. The method according to the invention minimizes said problem insofar as the battery with a high cyclability allows fully charging the lead-acid battery, assuring a full charge thereof and preventing sulfation.

The charging method according to the invention allows prolonging the service life of the lead-acid battery up to about 50-100%.

Another aspect of the invention relates to a hybrid battery comprising at least one lead-acid battery, at least one battery with a high cyclability, and at least one DC/DC converter. The DC/DC converter is configured to allow fully charging the lead-acid battery through the battery with a high cyclability with a current of less than about 10% of the rated capacity of the lead-acid battery for a maximum of about four hours. The lead-acid battery is thereby converted into a hybrid battery as it is fully charged by the battery with a high cyclability.

One of the advantages of said invention is that the control system regulating the second step of charging the lead-acid battery and the charging and discharging of the battery with a high cyclability is completely autonomous with respect to the control of the rest of the installation and of the external charger which is responsible for the first charging step. Furthermore, this control is implemented with low-cost elements, which greatly favors the economic viability of the invention.

Another factor favoring the economic viability of the invention is that the battery with a high cyclability proposed to be added has a very small capacity with respect to the lead-acid battery (up to 20% but preferably between 4-10% thereof), reducing final hybridization costs.

These and other advantages and features of the invention will become evident in view of the drawings and detailed description of the invention.

### DESCRIPTION OF THE DRAWINGS

Figure 1 shows a generic installation powered with a lead-acid battery known in the prior art.
Figure 2 shows an electrical diagram of a hybrid battery according to the invention.
Figure 3 shows a generic installation comprising the hybrid battery shown in Figure 2.

### DETAILED DISCLOSURE OF THE INVENTION

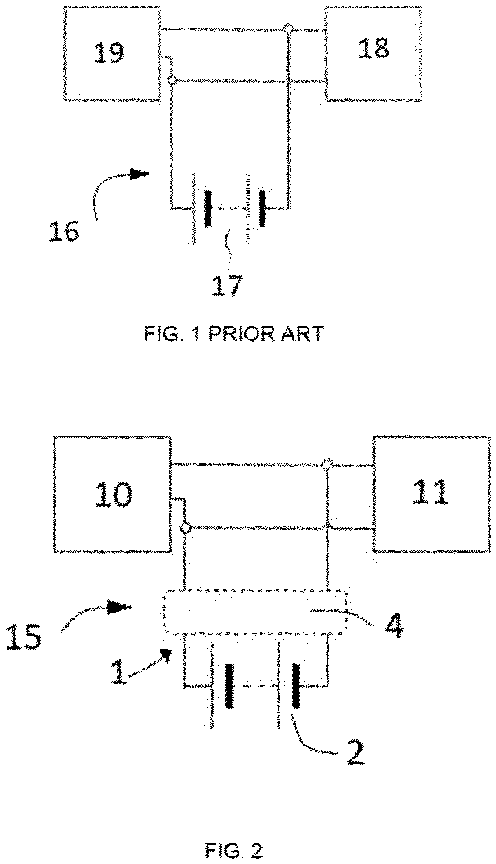

Figure 1 shows a generic installation 16 mainly for remote applications, said generic installation 16 comprising a lead-acid battery 17. The generic installation 16 is configured for powering external loads 18 by means of an energy source 19 and the lead-acid battery 17. The energy source 19 is preferably a renewable energy source such as solar energy, wind energy, etc. The installation 16 furthermore includes a control (not depicted) which manages said installation.

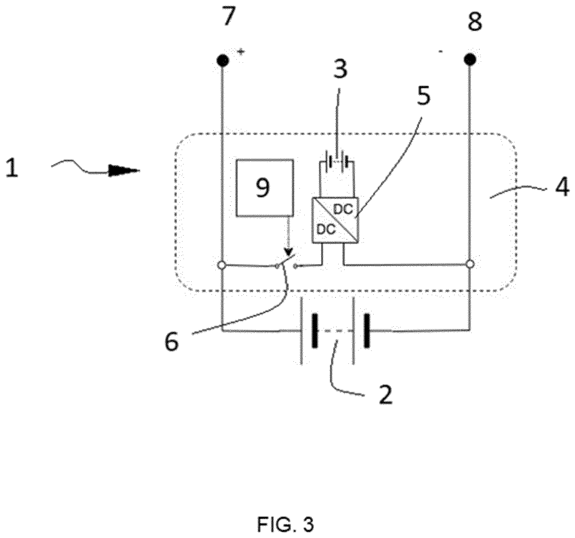

Figure 3 shows an installation 15 similar to the one shown in Figure 1 but comprising a hybrid battery 1 according to the invention instead of the lead-acid battery 17 known in the prior art.

Figure 2 schematically shows the hybrid battery 1 according to the invention. The hybrid battery 1 comprises a lead-acid battery 2, a battery with a high cyclability 3, a DC/DC converter 5, a switch 6 connected to the DC/DC converter, and control means 9 acting on the switch 6, opening or closing it to allow charging the lead-acid battery 2 by means of the battery with a high cyclability 3. The converter 5 is arranged connected, in parallel and/or in series, to the battery with a high cyclability 3, the battery with a high cyclability 3 being arranged connected in parallel with the lead-acid battery 2.

The control means 9 are configured for autonomously controlling the hybrid battery 1 with respect to the rest of the installation. The control means 9 are configured for activating or deactivating, through the switch 6, the charging of the lead-acid battery 2 through the battery with a high cyclability 3 with a current of less than about 10% of the rated capacity of the lead-acid battery 2 for a maximum of four hours when the lead-acid battery 2 is at a specific charge level. The control means 9 are also configured for recharging the battery with a high cyclability 3 when necessary. In the described embodiment, the control means 9 evaluate the charge level of the lead-acid battery 2 to proceed to charge the lead-acid battery 2 with the battery with a high cyclability 3 when the specific charge level is reached.

The objective of the battery with a high cyclability 3 is to power the lead-acid battery 2, not being used to serve other external loads 11.

In the described embodiment, the battery with a high cyclability 3 is a lithium-ion battery. In other embodiments, the battery with a high cyclability can be a battery of another technology (NiMH, etc.).

The rated capacity of the battery with a high cyclability 3 is at most about 20% of the rated capacity of the lead-acid battery 2. In a preferred embodiment, the rated capacity of the battery with a high cyclability 3 is comprised in an interval of between about 4% and about 10% of the rated capacity of the lead-acid battery 2.

In the embodiment shown in Figure 3, the DC/DC-type converter 5 is a bidirectional converter, but in other embodiments, two unidirectional DC/DC converters arranged in parallel can be used. Likewise, if the corresponding DC/DC converter includes an activation/deactivation pin, said pin would perform the function of the switch 6, eliminating the need to include this switch.

The battery with a high cyclability 3, the converter 5, and the control means 9 are arranged in the form of a pre-assembled module 4 (also referred to as "microhybridization kit"), schematically depicted in Figures 2 and 3, that can be readily connected to the lead-acid battery 2 for the purpose of fully charging the lead-acid battery 2 and thus prolonging the service life of the lead-acid battery 2, without having any implications on the operation of the installation 15. The pre-assembled module 4 will be adapted to the size of the lead-acid battery 2, where an enveloping casing may or may not be included. The conversion of the lead-acid battery 2 to a hybrid battery is therefore very simple and quick given that simply connecting the pre-assembled module 4 directly to the lead-acid battery 2 would suffice, being transparent for the rest of the installation 15. The operation of the pre-assembled module 4 is completely autonomous, insofar as it does not require any additional external control and is transparent for the rest of the installation 15. In other words, the control means 9 integrated in the pre-assembled module 4 are independent and operate autonomously and independently of a control which manages the rest of the installation 15.

The hybrid battery 1 may comprise a plurality of lead-acid batteries 2 connected in series and/or in parallel with one another, and a plurality of batteries with a high cyclability 3, connected in series and/or in parallel with one another, each of which is arranged connected in parallel with the corresponding lead-acid battery 2. Each battery with a high cyclability 3 would be housed in module 4 and connected to the respective converter 5.

Each hybrid battery 1 includes terminals 7 and 8, shown in Figure 3, for connection thereof with the rest of the installation 15, i.e., the hybrid battery 1 is connected, through the terminals 7 and 8, with an external charger 10 and with external loads charges 11 which are powered by the hybrid battery 1 at least when the charger 10 is not capable of powering said loads 11.

Another aspect of the invention relates to the charging method for charging the lead-acid battery 2 through the battery with a high cyclability 3. The hybrid battery 1 described in the preceding paragraphs is charged according to the method which will be described in detail below.

The method comprises a first charging step for charging the lead-acid battery 2 through the charger 10 until the lead-acid battery 2 reaches a specific charge level. This charger 10 for lead-acid batteries 2 is powered from any type of energy source. In solar applications, a solar charger will be used.

In those cases in which the charger 10 only charges a constant current (CC), the first step will end, i.e., it is considered that the lead-acid battery 2 has reached the specific charge level, when the control means 9 detect that, after the lead-acid battery 2 reaches the maximum voltage limited by charger 10, the voltage in terminals 7 and 8 of the lead-acid battery 2 is kept at a constant open-circuit voltage (OCV) for a time of less than about 15 minutes. The open-circuit voltage is less than the floating voltage, with floating voltage being understood as the voltage at which a battery remains after it has been fully charged to maintain that capacity by means of compensating for the self-discharge of the battery itself. The floating voltage for a lead-acid battery is about 2.3 V.

In the cases in which the charger 10 charges in constant current-constant voltage (CC-CV), the first step will end, i.e., it is considered that the lead-acid battery 2 has reached the specific charge level, when, after the lead-acid battery 2 reaches the maximum voltage limited by charger 10, the control means 9 detect a drop in the current supplied by the charger 10 of at least about 5% of the rated capacity of the lead-acid battery 2, or when the control means 9 detect that the voltage in terminals 7 and 8 of the lead-acid battery 2 is in a constant open-circuit voltage (OCV) for a time of less than about 15 minutes.

The control means 9 control the charge levels through the voltage values measured in terminals 7 and 8, which enables an independent control of the charging conditions of charger 10.

Once the lead-acid battery 2 reaches the specific charge level, the first step ends, and the second step in which the battery with a high cyclability 3 charges the lead-acid battery 2 to fully charge same and prevent its sulfation starts.

In the second charging step for charging the lead-acid battery 2 through the battery with a high cyclability 3, the lead-acid battery 2 is fully charged, the current supplied to the lead-acid battery 2 by the battery with a high cyclability 3 being less than about 10% of the rated capacity of the lead-acid battery 2 for a maximum of about four hours.

In a preferred embodiment of the invention, the battery with a high cyclability 3 supplies a current of about 2% of the rated capacity of the lead-acid battery 2 for about two hours.

In one embodiment, this second charging step ends when the battery with a high cyclability 3 reaches a minimum voltage value, said minimum voltage value being dependent on the technology used in the battery with a high cyclability 3. For example, in the case of using an LFP lithium battery, said minimum voltage value would be about 2.5 V.

Finally, in the first step, the charger 10 also recharges the battery with a high cyclability 3 so as to allow it to charge the lead-acid battery in the second step.

Therefore, in one embodiment, in the first step, the charger 10 simultaneously charges the battery with a high cyclability 3 and the lead-acid battery 2 until said battery with a high cyclability 3 reaches a maximum charging voltage, from which time the charger 10 will continue to charge the lead-acid battery 2 until the start of the second step as described in detail above. If the battery with a high cyclability 3 is an LFP lithium-ion battery, the maximum charging voltage will be about 3.65 V.

In another embodiment, in the first step, the charger 10 charges the lead-acid battery 2 until a maximum charging voltage. When the control means 9 detect that the voltage remains constant for at least a predetermined time, the charger 10 then charges the battery with a high cyclability 3 at a maximum charging voltage. In a preferred embodiment, the predetermined time is about 1 hour.

## Claims

1. Charging method for charging at least one lead-acid battery (2), comprising a first charging step for charging the lead-acid battery (2) through an external charger (10), **characterized in that** it comprises a second charging step for charging the lead-acid battery (2) through a battery with a high cyclability (3) during which the lead-acid battery (2) is fully charged by the battery with a high cyclability (3) supplying the lead-acid battery (2) a current of less than about 10% of the rated capacity of the lead-acid battery (2) for a maximum of about four hours.

2. Charging method according to the preceding claim, wherein the battery with a high cyclability (3) supplies a current of about 2% of the rated capacity of the lead-acid battery (2) for about two hours.

3. Charging method according to any of the preceding claims, wherein the rated capacity of the battery with a high cyclability (3) is at most about 20% of the rated capacity of the lead-acid battery (2).

4. Charging method according to the preceding claim, wherein the battery with a high cyclability (3) has a rated capacity comprised in an interval of between about 4% and about 10% of the rated capacity of the lead-acid battery (2).

5. Charging method according to any of the preceding claims, wherein the second charging step starts when it is detected that, after the lead-acid battery (2) reaches a maximum voltage limited by the charger (10), the voltage in terminals (7, 8) of the lead-acid battery (2) is kept at a constant open-circuit voltage (OCV) for a time of less than about 15 minutes.

6. Charging method according to any of claims 1 to 4, wherein the second charging step starts when the current level the charger (10) supplies to the lead-acid battery (2) drops to a value of at least about 5% of the rated capacity of the lead-acid battery (2).

7. Charging method according to any of the preceding claims, wherein the second charging step ends when the battery with a high cyclability (3) reaches a minimum established voltage value.

8. Charging method according to any of the preceding claims, wherein in the first step, the charger (10) simultaneously charges the battery with a high cyclability (3) and the lead-acid battery (2) until said battery with a high cyclability (3) reaches a maximum charging voltage, from which time the charger (10) will continue charging only the lead-acid battery (2).

9. Charging method according to any of claims 1 to 7, wherein in the first step, the charger (10) charges the lead-acid battery (2) until a maximum charging voltage, the voltage being kept constant for at least a predetermined time, at which time the charger (10) charges the battery with a high cyclability (3) until a maximum charging voltage.

10. Hybrid battery comprising at least one lead-acid battery (2), at least one battery with a high cyclability (3), the battery with a high cyclability (3) being arranged connected to the lead-acid battery (2), at least one DC/DC converter (5) connected to the battery with a high cyclability (3), and control means (9), **characterized in that** the control means (9) are configured for activating or deactivating the charging of the lead-acid battery (2) through the battery with a high cyclability (3) according to the charging method defined in any of the preceding claims.

11. Hybrid battery according to the preceding claim, wherein the rated capacity of the battery with a high cyclability (3) is at most about 20% of the rated capacity of the lead-acid battery (2).

12. Hybrid battery according to claim 10 or 11, wherein the capacity of the battery with a high cyclability (3) is comprised in an interval of between about 4% and about 10% of the rated capacity of the lead-acid battery (2).

13. Hybrid battery according to any of claims 10 to 12, wherein the battery with a high cyclability (3) is a lithium-ion battery.

14. Hybrid battery according to any of claims 10 to 13, wherein the battery with a high cyclability (3), the converter (5), and the control means (9) are integrated in a pre-assembled module (4) configured for being directly connected to the lead-acid battery (2).

15. Installation comprising a plurality of hybrid batteries (15) according to any of claims 10 to 14.
